# EUROPÄISCHE PATENTSCHRIFT

(11) **EP 2 236 800 B1**
(45) Veröffentlichungstag und Bekanntmachung des Hinweises auf die Patenterteilung: **29.05.2019**
(21) Anmeldenummer: 10156344.3
(22) Anmeldetag: 12.03.2010
(51) Int. Cl.: F02F 1/20

(54) **Zylinder mit Mitteln zur Verteilung von Schmiermittel**
Cylinder with devices for distributing lubricants
Cylindre doté de moyens de distribution de lubrifiant

(30) Priorität: 27.03.2009 EP 09156413
(43) Veröffentlichungstag der Anmeldung: 06.10.2010
(73) Patentinhaber: Wärtsilä Schweiz AG, 8401 Winterthur (CH)
(72) Erfinder: Räss, Konrad, 8457 Humlikon (CH); Galuska, Karol, 8500 Frauenfeld (CH)
(74) Vertreter: Intellectual Property Services GmbH

(56) Entgegenhaltungen:
- EP-A- 0 299 174
- EP-A- 0 943 794
- WO-A-97/42406
- WO-A-98/53192
- GB-A- 603 466
- JP-A- 60 259 750
- US-A1- 2007 101 967

## Beschreibung

Die Erfindung betrifft einen Zylinder für einen Kolbenmotor der Mittel zur Verteilung von Schmiermittel umfasst.

Bei grossen Zweitakt- oder auch Viertakt-Motoren erweist sich aufgrund der grossen zu benetzenden Oberflächen die Verteilung des Schmiermittels als kritisch. Das Schmiermittel gelangt durch eine begrenzte Anzahl am Umfang des Zylinders angeordneten Einspeisöffnungen in den Zylinderinnenraum. Damit das flüssige Schmiermittel sich gleichmässig über die Innenwand des Zylinders verteilt, sind umlaufende Rillen vorgesehen, wie sie beispielsweise in der FR1174532 gezeigt werden. Allerdings hat sich bei Langzeitbetrieb des Motors herausgestellt, dass die Rillen vor allem im höchstbelasteten Teil des Zylinders, der bis ca. 15% vom oberen Totpunkt des obersten Kolbenrings ausgehend in Richtung des unteren Totpunkts des Kolbens reicht, starkem Materialverlust ausgesetzt sind. Durch den in diesem Bereich vorherrschenden hohen Druck, der bis 200 bar betragen kann, sowie der hohen Temperatur, die mehr als 300°C betragen kann, erfolgt durch Wärmedehnung eine Vergrösserung des Kolbenquerschnitts und des Querschnitts der Kolbenringe. Durch den Druck werden die lose sitzenden Kolbenringe in Richtung der Zylinderinnenwand gepresst, was zum Druckaufbau im Brennraum erwünscht ist, aber mit einer starken Belastung durch Scherkräfte an der Zylinderinnenwand einhergeht. Durch diese Scherkräfte wird das durch die umlaufenden Rillen gebildete Profil im Dauerbetrieb abgetragen bzw. eingeebnet. Hieraus folgt zwingend, dass eine gleichmässige Verteilung des Schmiermittels im Dauerbetrieb nicht mehr gewährleistet ist. Fehlt die gleichmässige Verteilung des Schmiermittels, kommt es zumindest lokal zu Feststoffreibung, also einem direkten Kontakt zwischen Kolbenringaussenfläche und Zylinderinnenwand, wodurch nicht nur die Gleiteigenschaften beeinträchtigt werden, sondern es auch zu dem oben beschriebenen Materialverlust und weitergehender Schädigung der Zylinderinnenwand kommen kann. Um dieses Problem zu lösen, wurde in der WO98/53192 oder der EP 0 299 174 A1 vorgeschlagen, Vertiefungen in dem höchstbelasteten Teil des Zylinders vorzusehen, die entweder als am Zylinderumfang ringförmig angeordnete Nuten oder als Nutabschnitte ausgestaltet sind. Hierdurch kann wohl eine gleichmässigere Verteilung des Schmiermittels im höchstbelasteten Bereich der Zylinderinnenwand erreicht werden. Allerdings bleibt diese Verbesserung auf den genannten Längenbereich von bis zu 20% vom oberen Totpunkt des obersten Kolbenrings ausgehend beschränkt. Ringförmige Nuten weisen zudem einen weiteren Nachteil auf. Die Kanten der Kolbenringe werden durch die Kanten der Nut erfasst, sodass diese Kanten zu starken Materialverlust aufweisen, welcher zu Schädigung derselben führen kann.

WO98/53192 zeigt einen Zylinder nach dem Oberbegriff des Anspruchs 1.

Als Alternative wurde in der EP 0943794 vorgeschlagen, Rillen vorzusehen, wobei es sich bei diesen Rillen ebenfalls um Vertiefungen handelt. In diesen Rillen kann sich Schmiermittel ansammeln. Da die Rillen relativ zum Kolbenring geneigt sind, kommt im Betrieb ein Teil der Rille oberhalb des Kolbenrings zu liegen und ein Teil der Rille unterhalb des Kolbenrings. Daher kann ein Druckausgleich zwischen dem Raum oberhalb des Kolbenrings und dem Raum unterhalb des Kolbenrings erfolgen. Die Rillen können entweder parallel zueinander übereinander angeordnet sein oder sich kreuzen. Die Rillen dienen auch als Reservoir für Schmiermittel, um eine kurzfristig örtlich nicht ganz optimale Schmiermittelzufuhr, das heisst eine örtliche Mangelschmierung auszugleichen. Das bedeutet aber nichts anderes als dass die Rillen lokal ein Schmiermittelreservoir bilden, um örtliche Schwankungen in der Schmiermittelverteilung auszugleichen. In der Hauptsache dienen die Rillen aber dem Druckausgleich, das heisst dem Durchtritt von Gas. Dieser Druckausgleich wird im übrigen auch mit den Vertiefungen erzielt, die in der WO97/42406 gezeigt sind. Eine Verbesserung der Verteilung von Schmiermittel ist mit diesen Lösungen daher nur lokal in der nächsten Umgebung der Vertiefungen erzielbar.

Auch aus der JP 60 259750 sind Rillen für das Schmiermittel bekannt, welche relativ zum Kolbenring geneigt sind, und welche die gesamte Breite des Kolbenrings überbrücken, sodass das Gas durch diese Rillen von der Oberseite zur Unterseite des Kolbenrings strömen kann.

Aus allen diesen Gründen liegt der tatsächliche Schmiermittelverbrauch über der für die Schmierung des Gleitpaars Kolben-Zylinder notwendigen minimalen Schmiermittelmenge. Neben den insbesondere für Grossmotoren beträchtlichen Kosten stellt der Schmiermittelverbrauch auch eine Umweltbelastung dar. Ein grosser Teil der von Kolbenmaschinen emittierten Abgaspartikel stammt aus dem Schmiermittel.

Es ist daher Aufgabe der Erfindung, eine gleichmässige Verteilung des Schmiermittels über die gesamte Länge des Zylinders, die als Gleitfläche genutzt wird, zu erreichen, das heisst in dem Bereich der sich von der oberen Totzone bis zur unteren Totzone erstreckt. Eine weitere Aufgabe der Erfindung ist es, den Schmiermittelverbrauch zu senken.

Der Zylinder für eine Kolbenmaschine zur Aufnahme eines mindestens mit einem Kolbenring ausgestatteten Kolbens umfasst eine schlitzförmige Ausnehmung zur Aufnahme und Verteilung von Schmiermittel. Der Zylinder umfasst eine Gleitfläche für den Kolben, wobei die Gleitfläche sich von der oberen Totzone zu einer auf dem Zylinder angeordneten Reihe von Spülschlitzen erstreckt. Die schlitzförmige Ausnehmung ist auf der Gleitfläche angeordnet.

Die obere Totzone wird als die Ebene definiert, in welcher der Totpunkt des obersten Kolbenrings liegt.

Die schlitzförmige Ausnehmung umfasst einen ersten Teil und einen zweiten Teil, wobei der erste Teil ein erstes Ende und ein zweites Ende umfasst, wobei das erste Ende eine erste Öffnung zum Zylinderinnenraum enthält und das zweite Ende eine zweite Öffnung zum Zylinderinnenraum enthält, wobei der zweite Teil das zweite Ende und ein drittes Ende umfasst, wobei das dritte Ende eine dritte Öffnung zum Zylinderinnenraum enthält, und die erste Öffnung und die dritte Öffnung unterhalb des die schlitzförmige Ausnehmung passierenden Kolbenrings angeordnet sind und die zweite Öffnung gleichzeitig oberhalb des die schlitzförmige Ausnehmung passierenden Kolbenrings angeordnet ist, derart, dass eine Passage für Schmiermittel zwischen dem oberhalb des Kolbenrings befindlichen Zylinderinnenraum und dem unterhalb des Kolbenrings befindlichen Zylinderinnenraum ausbildbar ist, wenn sich der Kolbenring in einer Stellung zwischen einer der ersten oder dritten Öffnungen sowie der zweiten Öffnung befindet.

Eine Schmiermittelquelle zur Bereitstellung von Schmiermittel im Innenraum des Zylinders für das Gleitpaar Kolbenring und Innenwand des Zylinders ist vorgesehen. Das Schmiermittel gelangt von der Schmiermittelquelle über eine an der Innenwand des Zylinders befindliche Eintrittsöffnung in den Kolbenraum. Alternativ oder in Ergänzung dazu kann die Schmiermittelzufuhr auch über den Kolben erfolgen. Die Eintrittsöffnung ist somit an der Innenwand des Zylinders zur Förderung des Schmiermittels in den Kolbenraum vorgesehen. Zusätzlich ist eine Mehrzahl von schlitzförmigen Ausnehmungen vorgesehen, deren Enden derart miteinander verbunden sind, dass ein durchgehender Kanal gebildet wird, der sich entlang der Gleitfläche erstreckt, wobei in dem durchgehenden Kanal die Eintrittsöffnung zur Zufuhr von Schmiermittel angeordnet ist. Der durchgehende Kanal ist von der oberen Totzone weiter entfernt als die schlitzförmige Ausnehmung.

Versuche haben gezeigt, dass die schlitzförmigen Ausnehmungen keine Schmiermittelquelle enthalten müssen, um einen positiven Effekt auf das tribologische System zu bewirken. Hierzu werden schlitzförmige Ausnehmungen in der Form von Schmiermittelnuten vorgesehen, welche eine Eintrittsöffnung enthalten, die mit einer Schmierstoffquelle verbindbar ist. Die Schmiermittelnuten werden üblicherweise auf der Innenwand des Zylinders durch Schneidmittel erzeugt. Mit der Innenwand des Zylinders kann selbstverständlich auch die Innenwand eines Zylindereinsatzes gemeint sein. Die Eintrittsöffnung ist ausgestaltet, um eine Verteilung des Schmiermittels in Umfangsrichtung zu ermöglichen. Insbesondere kann der Schmiermittelkanal, der sich stromaufwärts der Eintrittsöffnung befindet, tangential zur Innenwand des Zylinders verlaufen. Die Eintrittsöffnung kann in die als schlitzförmige Ausnehmung ausgebildete Schmiermittelnut münden, alternativ oder in Ergänzung hierzu kann auch eine zusätzliche Schmiermittelnut vorgesehen sein, die an der Eintrittsöffnung ihren Anfang nimmt und im wesentlichen in einer Ebene liegt, die normal zur Zylinderachse gerichtet ist. Diese zusätzliche Schmiermittelnut kann eine Tiefe aufweisen, die in grösserer Entfernung von der Eintrittsöffnung kontinuierlich abnimmt. Des weiteren kann auch ihre Breite mit zunehmendem Abstand von der Eintrittsöffnung abnehmen.

Zwischen der Schmiermittelquelle und der Eintrittsöffnung können auch Förderelemente, wie beispielsweise Düsen oder Drosselstellen mit Rückschlagventil angeordnet sein.

Zur Verbesserung der Verteilung des Schmiermittels auf der Innenwand des Zylinders sind die schlitzförmigen Ausnehmungen in einem Abstand zur Schmiermittelquelle angeordnet.

Insbesondere kann die schlitzförmige Ausnehmung in einer Distanz von der oberen Totzone angeordnet sein, die bis zu 20% des Kolbenhubs beträgt, vorzugsweise bis zu 10% des Kolbenhubs beträgt, besonders bevorzugt bis zu 5% des Kolbenhubs beträgt.

Überraschenderweise hat sich gezeigt, dass Kolbenmaschinen, welche mit schlitzförmigen Ausnehmungen versehen werden sowie mit einer Mehrzahl von schlitzförmigen Ausnehmungen, deren Enden derart miteinander verbunden sind, dass ein durchgehender Kanal gebildet wird, einen geringeren Schmiermittelbedarf als die aus dem Stand der Technik bekannten Lösungen aufweisen. Somit kann die von der Schmiermittelquelle zuzuführende Fördermenge an Schmiermittel im Vergleich zu herkömmlichen Lösungen reduziert werden, obwohl an den Gleiteigenschaften des Reibpaars keine Änderungen vorgenommen worden sind und auch die Betriebsbedingungen der Kolbenmaschine nicht verändert worden sind.

Dieser durchgehende Kanal dient der Verteilung des Schmiermittels, welches über eine oder mehrere Eintrittsöffnungen in den Innenraum des Zylinders gelangt.

Hieraus ergibt sich, dass mittels der erfindungsgemässen Lösung überraschenderweise der Schmiermittelverbrauch wesentlich weiter abgesenkt werden kann als nach den vorbekannten Lösungen zu erwarten gewesen wäre, da festgestellt worden ist, dass der Verlust an Schmiermittel reduziert werden konnte.

Wenn der Kolben einen Kompressionshub durchführt, gleitet der Kolbenring entlang der Innenwand des Zylinders. In vielen Fällen ist eine Mehrzahl von Kolbenringen an dem Kolben angebracht. An der Innenwand befindliches Schmiermittel wird somit zumindest teilweise von dem Kolbenring erfasst, welcher dem Arbeitsraum am nächsten liegt. Als Arbeitraum wird der Bereich des Innenraums des Zylinders verstanden, in welchem sich der Brennstoff befindet. Bei vertikaler Anordnung des Zylinders handelt es sich um den obersten Kolbenring.

Das von dem Kolbenring erfasste Schmiermittel sammelt sich auf dem Kolbenring und würde in einer herkömmlichen Lösung in den Arbeitsraum gelangen und dort zusammen mit dem Brennstoff verbraucht. Wenn dieses Schmiermittel auf eine schlitzförmige Ausnehmung trifft, wird diese schlitzförmige Ausnehmung mit dem Schmiermittel befüllt. Sobald der Kolbenring in einer Stellung ist, in welcher die zweite Öffnung oberhalb des Kolbenrings und die ersten und dritten Öffnungen unterhalb des Kolbenrings zu liegen kommen, erfolgt ein Druckausgleich.

Dieser Druckausgleich erfolgt umso schneller, je näher sich die schlitzförmige Ausnehmung an der oberen Totzone befindet, ist also abhängig von der Distanz zur oberen Totzone.

Der Druckausgleich bewirkt eine Rückförderung des Schmiermittels über die schlitzförmige Ausnehmung zu den ersten und dritten Öffnungen. Das heisst, dass das Schmiermittel in einem Seitenstrom an dem Kolbenring vorbei vom Arbeitsraum in Richtung der Ansaugseite, welche die Spülschlitze enthält, fliesst. Wenn mehrere Kolbenringe auf dem Kolben angeordnet sind, führt der Seitenstrom dann vorbei am ersten Kolbenring, welcher den Arbeitsraum begrenzt, in einen Zwischenraum, der von dem ersten Kolbenring und einem zweiten Kolbenring begrenzt ist. Zwischen dem Arbeitsraum und dem Zwischenraum besteht eine Druckdifferenz, aufgrund derer das Schmiermittel in Richtung des Zwischenraums gefördert wird.

Neben der verbesserten Ölverteilung ergibt sich insbesondere durch die Anordnung von schlitzförmigen Ausnehmungen unterhalb der oberen Totzone in einem Bereich bis ungefähr 20% des Kolbenhubs ein weiterer Vorteil. Durch die schlitzförmige Ausnehmung entsteht ein Schmiermittel-Seitenstrom der an dem Kolbenring vorbei fliesst, sodass der Arbeitsraum der Kolbenmaschine mit dem Raum auf der Ansaugseite oder einem zwischen zwei Kolbenringen befindlichen Zwischenraum verbunden ist, wodurch der im Arbeitsraum anstehende höhere Druck verringert wird. Es findet über den Seitenstrom somit ein Druckausgleich statt, indem das Schmiermittel durch die schlitzförmige Ausnehmung gefördert wird. Demzufolge wird der Druck verringert, der auf den Flächen des ersten Kolbenrings lastet, die dem Arbeitsraum zugewendet sind. Hieraus resultiert eine geringere Reibung des Kolbenrings an der Innenwand des Zylinders, was einen verminderten Verschleiss von Kolbenringen und Innenwand des Zylinders zur Folge hat. Demzufolge erhöht sich die Lebensdauer von Kolbenringen und Zylinder.

Der Druckausgleich erfolgt so schnell, dass Schmiermittel durch die schlitzförmige Ausnehmung geblasen wird. Insbesondere wenn mehrere Kolbenringe vorhanden sind, erfolgt der Druckausgleich stufenweise. Das bedeutet, das von jedem dem Arbeitsraum näherliegenden Kolbenring zu einem vom Arbeitsraum entfernter liegenden Kolbenring ein Druckausgleich erfolgt. Hieraus folgt aber auch, dass die Strömungsgeschwindigkeit im Vergleich zum Stand der Technik stufenweise abnimmt. Sind keine schlitzförmigen Ausnehmungen vorgesehen, erfolgt der Druckausgleich erst vom Kolbenring zum Ansaugraum, das heisst, der im Arbeitsraum anliegende Druck muss erst in diesem Schritt auf den Druck im Ansaugraum vermindert werden. Hierdurch ergeben sich hohe Strömungsgeschwindigkeiten, sodass Schmiermittel in die Spülschlitze mitgerissen wird. Dies kann auch beim stufenweisen Druckausgleich erfolgen, allerdings wird der Anteil des Schmiermittels, der in die Spülschlitze gelangt, deutlich reduziert. Vorteilhafterweise sind hierfür eine Mehrzahl von Kolbenringen am Kolben angebracht. Zumindest einer der dem Arbeitsraum benachbarten oder der dem Ansaugraum benachbarten Kolbenringe kann mit einem offenen oder gasdichten Schloss versehen werden, sodass der Kolbenring den Arbeitsraum gasdicht abschliesst en kann, in den Bereichen, in denen keine schlitzförmigen Ausnehmungen angebracht sind.

Nach einer besonders bevorzugten Ausgestaltung der schlitzförmigen Ausnehmung bilden der erste Teil und der zweite Teil in einer Projektion der Gleitfläche auf eine Ebene Strecken aus, wobei zwischen den ersten und zweiten Strecken ein Winkel eingeschlossen ist, der grösser als 0° und kleiner als 180° ist. Diese schlitzförmige Ausnehmung hat V-förmige Form, wobei die Spitze des "V" den geringsten Abstand zur oberen Totzone 8 aufweist. Der Winkel ist insbesondere als stumpfer Winkel ausgebildet und liegt vorzugsweise zwischen 100° und 180°, besonders bevorzugt zwischen 130° und 175°, insbesondere zwischen 150° und 170°.

Die schlitzförmige Ausnehmung ist insbesondere derart ausgestaltet, dass einer der ersten oder zweiten Teile der schlitzförmigen Ausnehmung eine Länge aufweist, sowie eine Breite und eine Tiefe, wobei die Länge grösser als die Breite oder die Tiefe ist.

Die Tiefe beträgt vorzugsweise über 0.4 mm, da die schlitzförmige Ausnehmung in diesem Fall während der gesamten durchschnittlichen Betriebsdauer des Zylinders ohne Nachbearbeitung oder Wartung verwendbar ist. Die Kolbenringe können bei Kontakt mit der Oberfläche der Innenwand des Zylinders einen Materialverlust hervorrufen, der zu einer Zunahme des Innendurchmessers des Zylinders und demzufolge zu einer Abnahme der Tiefe der schlitzförmigen Ausnehmung führen. Wird eine schlitzförmige Ausnehmung mit einer Tiefe vorgesehen, welche grösser ist als der Verlust an Tiefe, der durch den durchschnittlich zu erwartenden Materialabtrag entsteht, braucht die schlitzförmige Auswertung im Betrieb nicht nachbearbeitet werden.

Insbesondere kann eine Mehrzahl von schlitzförmigen Ausnehmungen vorgesehen sein, deren Enden derart miteinander verbunden sind, dass ein durchgehender Kanal gebildet wird, der sich entlang der Gleitfläche erstreckt. Dieser durchgehende Kanal dient der Verteilung des Schmiermittels, welches über eine oder mehrere Eintrittsöffnungen in den Innenraum des Zylinders gelangt. Der durchgehende Kanal ist von der oberen Totzone weiter entfernt angeordnet als die schlitzförmige Ausnehmung. Vorzugsweise erstreckt sich der durchgehende Kanal entlang des Umfangs der Gleitfläche des Zylinders, insbesondere des Zylindereinsatzes.

In dem durchgehenden Kanal ist eine Eintrittsöffnung zur Zufuhr von Schmiermittel angeordnet. Insbesondere können auch mehrere Eintrittsöffnungen vorgesehen werden, um das Schmiermittel gleichmässiger auf der Innenwand des Zylinders zu verteilen, sodass die Innenwand gleichmässig mit Schmiermittel benetzt wird. Da aufgrund des zunehmenden Innendrucks im Arbeitsraum während des Kompressionshubes für die letzten 30% des Kolbenhubs ein erhöhter Schmiermittelbedarf besteht, befinden sich die Eintrittsöffnung oder der durchgehende Kanal vorzugsweise in einer Position, die einer Distanz von ca. 30 % des Kolbenhubs unterhalb der oberen Totzone entspricht.

Die schlitzförmige Ausnehmung nach einem der Ausführungsbeispiele weist an ihrem zweiten Ende einen Scheitelpunkt auf, wobei die Scheitelpunkte benachbarter schlitzförmiger Ausnehmungen im selben Abstand gemessen zur oberen Totzone liegen. Der Scheitelpunkt ist der Punkt der schlitzförmigen Ausnehmung, welcher den geringsten Abstand zu der oberen Totzone aufweist.

Eine Mehrzahl von schlitzförmigen Ausnehmungen kann in einer Reihe angeordnet sein. In einer Reihe sind die Scheitelpunkte im selben Abstand zur oberen Totzone angeordnet. In einer Reihe von schlitzförmigen Ausnehmungen wird eine Mehrzahl von schlitzförmigen Ausnehmungen von einem Kolbenring zur im wesentlichen gleichen Zeit überstrichen.

Die Anzahl der schlitzförmigen Ausnehmungen in einer Reihe beträgt vorzugsweise 5 bis 80, abhängig von der Länge der schlitzförmigen Ausnehmung und dem Abstand zwischen zwei benachbarten schlitzförmigen Ausnehmungen. Die Länge und der Abstand von zwei benachbarten schlitzförmigen Ausnehmungen in einer Reihe voneinander wird vorzugsweise so gewählt, dass die Innenwand des Zylinders zwischen der schlitzförmigen Ausnehmung und der Schmiermittelzufuhr von Schmiermittel vollständig benetzt wird.

Nach einem besonders vorteilhaften Ausführungsbeispiel ist die Länge des Abstands grösser als die Projektion der Länge der schlitzförmigen Ausnehmung in die Ebene, welche die Reihe enthält. Die Länge der schlitzförmigen Ausnehmung wird als eine der Längen des ersten Teils oder des zweiten Teils definiert, bei unterschiedlichen Längen soll die grössere Länge als die massgebliche Länge definiert sein. Der Abstand von zwei Scheitelpunkten von benachbarten schlitzförmigen Ausnehmungen kann insbesondere gleich dem Abstand von zwei benachbarten Eintrittsöffnungen sein. Der Scheitelpunkt der schlitzförmigen Ausnehmung kann insbesondere auf der Falllinie der Eintrittsöffnung liegen.

Die Scheitelpunkte benachbarter schlitzförmiger Ausnehmungen sind nach einem alternativen Ausführungsbeispiel zueinander versetzt angeordnet. Insbesondere kann eine Mehrzahl von schlitzförmigen Ausnehmungen in einer Mehrzahl von Reihen angeordnet sein.

Die Reihe kann eine Steigung aufweisen, die vorzugsweise kleiner als die Steigung ist, die der Höhe des Kolbenrings entspricht. Daher beträgt der Neigungswinkel der schlitzförmigen Ausnehmungen einer Reihe bis zu 1°. Diese Massnahme dient einer erhöhten Laufruhe des Kolbenrings. Die Berührung zwischen der Kante der schlitzförmigen Ausnehmung und dem Kolbenring erfolgt somit immer nur in einem Punkt. Durch den Neigungswinkel wird folglich eine flächige Auflage der Kante des Kolbenrings auf einer Kante einer schlitzförmigen Ausnehmung vermieden, wodurch keine Scherkräfte in die Kante der schlitzförmigen Ausnehmung eingeleitet werden und somit kaum Materialabtrag an der Kante erfolgt. Somit hat die Einhaltung einer Steigung eine Erhöhung der Lebensdauer des Zylinders zur Folge.

Die Breite der schlitzförmigen Ausnehmungen liegt vorzugsweise zwischen 0.5 und 3 mm, sollte aber in jedem Fall kleiner als 80%, vorzugsweise 70%, besonders bevorzugt 60% der Breite des schmalsten Kolbenrings betragen. Hierdurch ist gewährleistet, dass sich der Kolbenring nicht in der schlitzförmigen Ausnehmung verkanten kann und über die Ausnehmung berührungsfrei hinweggleitet.

Die Länge der schlitzförmigen Ausnehmungen beträgt zwischen 10 und 100 mm, vorzugsweise zwischen 10 und 50 mm, besonders bevorzugt zwischen 10 und 30 mm.

Die Anzahl und/oder die Tiefe und/oder die Länge und/oder die Breite der schlitzförmigen Ausnehmungen können sich voneinander unterscheiden.

Vorteilhafterweise sind die schlitzförmigen Ausnehmungen benachbarter Reihen zueinander versetzt angeordnet. Durch die Versetzung wird eine optimale Benetzung der Innenwand des Zylinders mit Schmiermittel bei geringst möglicher Schwächung des Zylindermantels erreicht.

Die Anzahl der schlitzförmigen Ausnehmungen ist grösser oder gleich 10, insbesondere grösser oder gleich 50 besonders bevorzugt grösser oder gleich 100 pro m² Gleitfläche. Die Anzahl der schlitzförmigen Ausnehmungen pro m² Gleitfläche kann variabel sein, da Teile der Gleitfläche unterschiedlichen Belastungen standhalten müssen. Des weiteren können schlitzförmige Ausnehmungen auch im Bereich der Spülschlitze sowie unterhalb derselben vorgesehen sein.

Ein Verfahren zur Verteilung von Schmiermittel in einem Zylinder gemäss der vorhergehenden Ausführungsformen umfasst den Schritt der Herstellung einer schlitzförmigen Ausnehmung, insbesondere durch ein mechanisches Bearbeitungsverfahren.

Der Zylinder findet Verwendung in einem Grossmotor, vorzugsweise in einem Grossdieselmotor, der beispielsweise als 2-Takt Motor oder als 4-Takt Motor ausgeführt sein kann.

Die Erfindung wird im folgenden anhand der beiliegenden Zeichnungen genauer erläutert. Es zeigen
Fig. 1 einen Schnitt durch einen Zylinder
Fig. 2 eine Abwicklung eines Zylinders
Fig. 3 eine Darstellung des Gleitpaars Kolbenring und Innenwand des Zylinders
Fig. 4 eine erste Variante für die Anordnung von schlitzförmigen Ausnehmungen an der Innenwand des Zylinders
Fig. 5 eine zweite Variante für die Anordnung von schlitzförmigen Ausnehmungen an der Innenwand des Zylinders
Fig. 6a eine erste Ausführungsform für eine schlitzförmige Ausnehmung
Fig. 6b eine zweite Ausführungsform für eine schlitzförmige Ausnehmung
Fig. 6c eine dritte Ausführungsform für eine schlitzförmige Ausnehmung
Fig. 6d eine vierte Ausführungsform für eine schlitzförmige Ausnehmung
Fig. 6e eine fünfte Ausführungsform für eine schlitzförmige Ausnehmung
Fig. 6f eine sechste Ausführungsform für eine schlitzförmige Ausnehmung
Fig. 6g eine siebente Ausführungsform für eine schlitzförmige Ausnehmung
Fig. 6h eine achte Ausführungsform für eine schlitzförmige Ausnehmung
Fig. 7 eine Darstellung einer Gleitfläche nach dem Stand der Technik
Fig. 8 eine Darstellung einer Gleitfläche gemäss der Erfindung

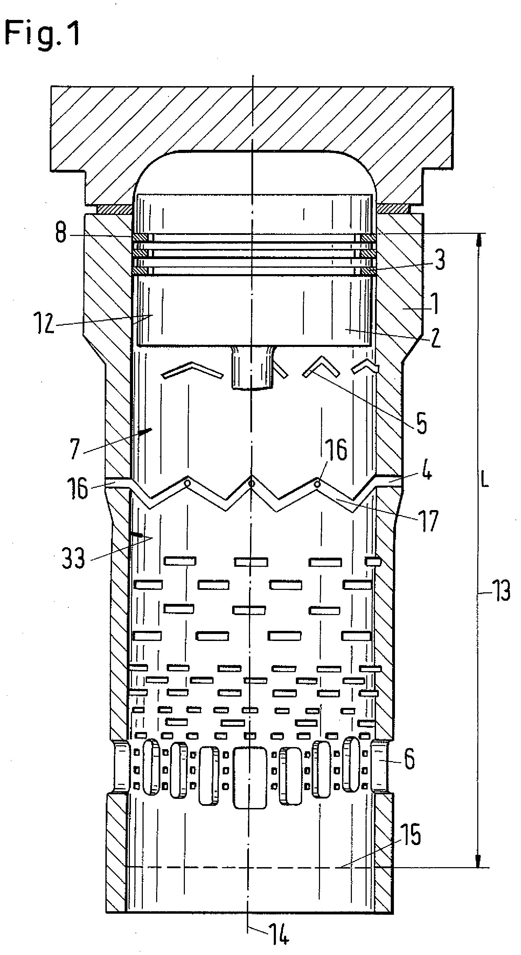

Fig. 1 zeigt einen Schnitt durch einen Zylinder 1, welcher in einem Kolbenmotor angeordnet ist. Bei dem Kolbenmotor handelt es sich um einen 2-Takt-Motor oder einen 4-Takt-Motor, insbesondere um einen Grossmotor, der zumeist als Grossdieselmotor ausgeführt ist. Derartige Grossdieselmotoren werden zur Zeit mit Zylindern ausgerüstet, deren Innendurchmesser zumeist grösser als 190 mm ist. Typische Durchmesser liegen zwischen 250 und 1000 mm. Im Inneren des Zylinders bewegt sich ein Kolben hin und her, welcher über eine Kurbelstange mit einer drehbaren Antriebswelle verbunden ist. Die Hin- und Herbewegung des Kolbens erfolgt zwischen einem oberen und unteren Totpunkt. Fig. 1 zeigt den Kolben in der Position am oberen Totpunkt. Legt man durch den oberen Totpunkt des obersten Kolbenrings eine Schnittebene, welche normal auf die Zylinderachse 14 steht, schneidet die Ebene die Innenwand des Zylinders längs einer Linie, die einen Bereich umrundet, der fortan als obere Totzone 8 bezeichnet werden soll. Die obere Totzone 8 bildet bei vertikaler Anordnung des Zylinders die obere Begrenzung der Gleitfläche 7 aus. Legt man eine gleichartige Schnittebene durch den unteren Totpunkt des untersten Kolbenrings, erhält man in gleicher Weise die untere Totzone 15. Die Länge L (13) bezeichnet den Abstand zwischen oberer Totzone 8 und unterer Totzone 15 und entspricht der Länge der Gleitfläche. Die Gleitflächen können eine Länge von 1 m bis ca. 4 m aufweisen. Die Breite der Gleitfläche wird durch den Umfang an der oberen Totzone 8, sowie den Umfang an der unteren Totzone 15 gebildet. Die Breite der Gleitfläche an der oberen Totzone 8 ist grösser als die Breite der Gleitfläche der unteren Totzone 15, da der Zylinderinnenraum in der Regel nicht zylindrisch sondern leicht konisch ausgebildet ist. Diese Konizität hat ihre Ursache in den unterschiedlichen Temperaturen, welche in den einzelnen Zonen der Gleitfläche vorliegen. Im Bereich der unteren Totzone wird Luft aus der Umgebung angesaugt, sodass in diesem Bereich Betriebstemperaturen vorherrschen, die sich nicht wesentlich von der Umgebungstemperatur der Luft im Motorraum unterscheiden. Im Bereich der oberen Totzone können jedoch Temperaturen grösser als 300°C vorherrschen. Bedingt durch diese beträchtlichen Temperaturunterschiede kommt es zu Wärmedehnungen, die insbesondere zur Ausdehnung der auf dem Kolben 2 befindlichen Kolbenringe 3 führt, die im Bereich der unteren Totzone 15 unzulässig gegen die Innenwand des Zylinders pressen würden und folglich die Ausbildung eines Schmierfilms behindern. Die Massnahme gegen die unerwünschte Feststoffreibung zwischen Innenwand des Zylinders und Kolbenringen ist das Einbringen eines Schmiermittels, welches die Innenwand 33 des Zylinders 1 im Bereich der Gleitfläche 7 als Schmierfilm überzieht.

Das Schmiermittel wird über die Schmiermittelzufuhr 4 in den Zylinderraum eingespeist. Das Schmiermittel soll nicht nur eine adäquate Kolbenschmierung gewährleisten, sondern auch Schwefelsäure neutralisieren, die durch die Verwendung von schwefelhaltigem Brennstoff in den Brennraum gelangt.

Eine oder mehrere Eintrittsöffnungen 16 können am Umfang des Zylinders verteilt vorgesehen sein. Von den Eintrittsöffnungen ausgehend erstreckt sich ein Kanal 17 entlang der Innenwand 33 des Zylinders, mittels welchem die Förderung und Verteilung des Schmiermittels erfolgt. Das Schmiermittel benetzt bei vertikaler Ausrichtung des Zylinders die gesamte Gleitfläche 7 unterhalb des Kanals. Bewegt sich der Kolben 2 in der Expansionsphase an den Eintrittsöffnungen 16 vorbei, wird das Schmiermittel von dem oder den an der Innenwand 33 des Zylinders gleitenden Kolbenringen 3 mit transportiert und steht für eine weitere Schmierung nicht mehr zur Verfügung. Hierdurch ergibt sich ein erhöhter Schmiermittelverbrauch, welcher bei derartig grossen mit Schmiermittel zu benetzenden Oberflächen einen nicht zu vernachlässigenden Kostenfaktor darstellt.

Der Zylinder für eine Kolbenmaschine zur Aufnahme eines mit mindestens einem Kolbenring 3 ausgestatteten Kolbens 2 umfasst eine schlitzförmige Ausnehmung 5 zur Verteilung von Schmiermittel, wobei der Zylinder eine Gleitfläche 7 für den Kolben 2 umfasst, wobei die Gleitfläche 7 sich von einer oberen Totzone 8 zu einer auf dem Zylinder angeordneten Reihe von Spülschlitzen 6 erstreckt, wobei die schlitzförmige Ausnehmung 5 auf der Gleitfläche 7 angeordnet ist.

Die schlitzförmige Ausnehmung 5 dient als Schmiermitteltasche. Wird Schmiermittel über Eintrittsöffnungen 16 zugeführt, wird es vom Kolbenring 3 erfasst und mit dem Kolbenring 3 mitgeführt und bildet einen Schmiermittelfilm zwischen der Innenwand 33 des Zylinders und dem Kolbenring aus. Ein Teil des Schmiermittels tritt durch den Zwischenraum zwischen Kolbenring 3 und Innenwand 33 aus. Dieser Teil soll allerdings so gering wie möglich sein, da der Kolbenring 3 möglichst dicht an der Innenwand 33 des Zylinders anliegen soll. Wäre dies nicht der Fall, würde das Brennstoff-Gasgemisch, welches sich im Arbeitsraum befinden kann, austreten und zu den Spülschlitzen 6 gelangen. Im Arbeitsraum können Drücke von bis zu 140 bar herrschen. Überschüssiges Schmiermittel im Arbeitsraum fliesst längs der Innenwand 33 des Zylinders ab und gelangt in die schlitzförmige Ausnehmung 5, in welcher sich ein Schmiermittelvorrat ausbildet. Schlitzförmige Ausnehmungen 5, die sich oberhalb einer Eintrittsöffnung 16 für Schmiermittel befinden, werden mit Schmiermittel befüllt, wenn der Kolbenring an der schlitzförmigen Ausnehmung vorbeigleitet. Der Kolbenring transportiert einen Teil des Schmiermittels während seiner Bewegung mit, welches in die schlitzförmige Ausnehmung ausweicht und diese auffüllt, wenn der Kolbenring an einer solchen schlitzförmigen Ausnehmung vorbeikommt.

Insbesondere können die schlitzförmigen Ausnehmungen auch im Bereich der Spülschlitze 6 sowie unterhalb derselben vorgesehen sein. In diesem Bereich wurden in der Vergangenheit ebenfalls Schäden durch Materialverlust festgestellt. Dieser Materialverlust war ebenfalls auf unzureichende, weil ungleichmässige, Schmiermittelversorgung zurückzuführen. Das über die Schmiermittelzufuhr 4 eingebrachte Schmiermittel wird zyklisch zugeführt, in der in Fig. 1 dargestellten Stellung des Kolbens, da hierbei das Schmiermittel nicht unter hohem Druck gefördert werden muss. Schmiermittel rinnt entlang der Zylinderwand nach unten und wird dann durch die Kolbenringe 3 des sich in der Expansionsphase befindlichen Kolbens mitgenommen. Ein Teil des Schmiermittels gelangt zwar bis zu den Spülschlitzen 6, kann dort aber nur gespeichert werden, wenn auch im Bereich der Spülschlitze bis zu der unterst möglichen Position des zuunterst liegenden Kolbenrings schlitzförmige Ausnehmungen vorgesehen sind, wenn sich der Kolben im unteren Totpunkt befindet. Wären diese schlitzförmigen Ausnehmungen nicht vorhanden, würden die Kolbenringe die restliche Schmiermittelmenge ausschieben und diese Schmiermittelmenge stände für weitere Schmierung nicht mehr zur Verfügung. Zudem ergibt sich der Nachteil, dass gerade im Bereich der Spülschlitze 6 kein Schmiermittel mehr vorhanden wäre, wenn der Kolben seinen Kompressionshub beginnt. Die Kolbenringe 3 würden daher zu Beginn des Kompressionshubs trocken laufen. Das in den schlitzförmigen Ausnehmungen 5 befindliche Schmiermittel kann sich hingegen über die Innenwand des Zylinders im Bereich der Spülschlitze 6 verteilen und gewährleistet eine ausreichende Schmierung für den gesamten Kompressionshub.

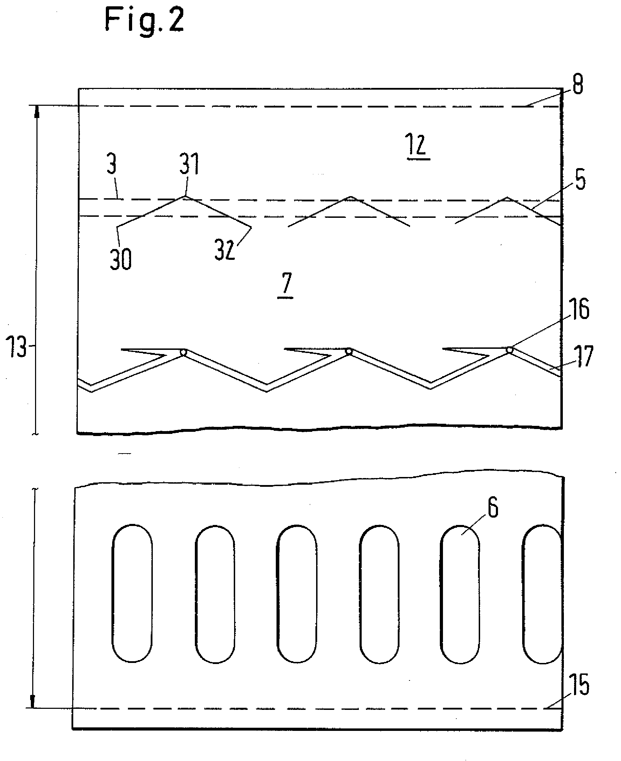

Fig. 2 zeigt eine Abwicklung der Innenwand 12 eines Zylinders 1. Die Gleitfläche 7 erstreckt sich von der unteren Totzone 15 bis zur oberen Totzone 8. Insbesondere ist der Teil der Gleitfläche 7 dargestellt, der schlitzförmige Ausnehmungen 5 enthält. Eine gestrichelte Linie zeigt die Position des Kolbenrings 3, der die schlitzförmigen Ausnehmungen überstreicht.

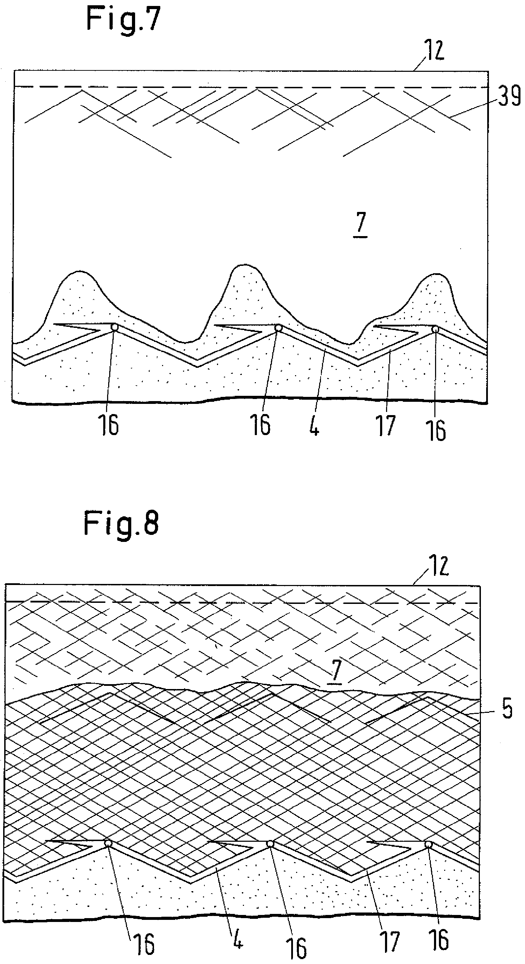

Dadurch, dass die zweite Öffnung 31 oberhalb des Kolbenrings bei dem im Arbeitsraum herrschenden Druck zu liegen kommt, wie in Fig. 2 gezeigt wird, die erste und dritte Öffnung 30, 32 unterhalb desselben Kolbenrings in einem Zwischenraum zwischen dem ersten und zweiten Kolbenring oder dem Ansaugraum, in welchem ein wesentlich niedrigerer Druck herrscht, kann eine besonders gleichmässige Verteilung des Schmiermittels erreicht werden. Jeder Schmiermittelstrom wird nicht nur als Seitenstrom um den Kolbenring 3 herum geführt, sondern es erfolgt auch eine Stromteilung auf die entsprechende erste und dritte Öffnung 30, 32. Diese Stromteilung hat eine unerwartet bessere Verteilung des Schmiermittels auf der Gleitfläche 7 der Innenwand 12 zur Folge. Dieser Effekt kann mittels der Versuchsergebnisse gemäss Fig. 7 und Fig. 8 belegt werden.

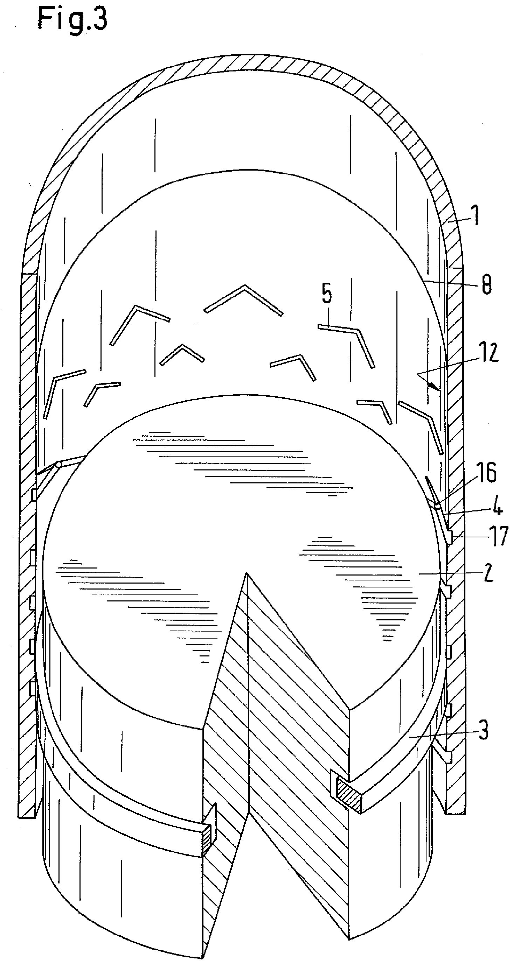

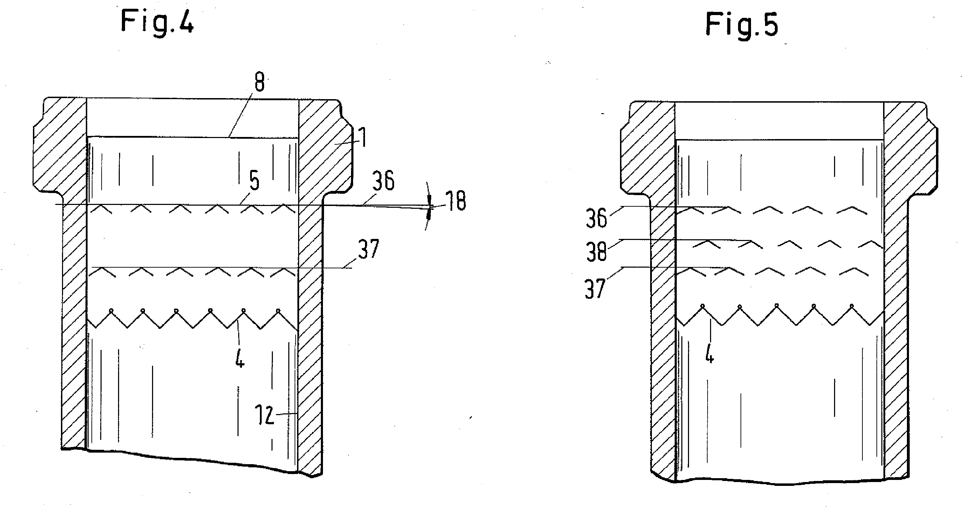

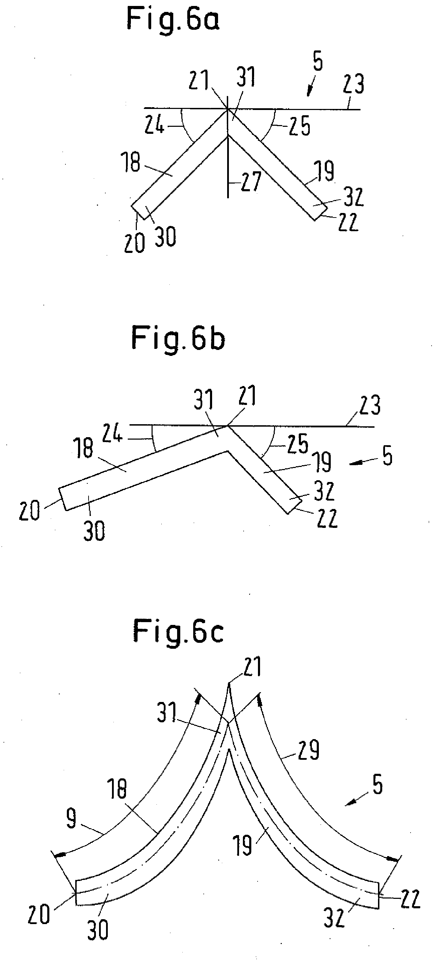

Fig. 3 zeigt eine Darstellung des Gleitpaars Kolbenring 3 und Innenwand 12 des Zylinders 1. In diesem Fall befinden sich in dem ringförmigen Bereich, der bis zu 20% der Gleitfläche beträgt und unmittelbar unterhalb der oberen Totzone 8 angeordnet ist, schlitzförmige Ausnehmungen 5, die beispielsweise nach einem der Ausführungsbeispiele gemäss Fig. 6a bis 6h ausgeführt sein können, aber auch andere nicht dargestellte geometrische Formen aufweisen können. Der Kolben 2 befindet sich gemäss Fig. 3 in einer Stellung unterhalb des ringförmigen Bereichs. Es kann insbesondere vorteilhaft sein, den ringförmigen Bereich von bis zu 10%, vorzugsweise bis zu 5% für die schlitzförmigen Ausnehmungen vorzusehen. In Fig. 3 oder Fig. 5 ist auch gezeigt, dass schlitzförmige Ausnehmungen unterschiedlicher Abmessungen innerhalb des ringförmigen Bereichs angeordnet werden können.

Des weiteren ist gezeigt, dass mehrere Kanäle 17 vorgesehen sein können, welche der Schmiermittelzufuhr dienen können. Die Kanäle sind in dieser Darstellung durch den Kolben 2 grossteils verdeckt. Ein Teil der Kanäle kann ohne Eintrittsöffnungen ausgestaltet sein. Alternativ dazu können auch durchgehende Kanäle abwechselnd mit diskreten schlitzförmigen Ausnehmungen vorgesehen sein. Alternativ dazu können auch Eintrittsöffnungen 16 vorgesehen sein, die direkt in den Innenraum des Zylinders münden.

Fig. 4 und Fig. 5 zeigen, dass eine Mehrzahl von Reihen von schlitzförmigen Ausnehmungen 5 an der Innenwand 12 des Zylinders 1 vorgesehen werden kann. In Fig. 4 sind zwei Reihen 36, 37 von schlitzförmigen Ausnehmungen 5 gezeigt, die zwischen der Schmiermittelzufuhr 4 und der oberen Totzone 8 angeordnet sind. Zur ausreichenden Versorgung mit Schmiermittel ist es vorteilhaft, wenn die schlitzförmigen Ausnehmungen 5 in einer Distanz von der oberen Totzone 8 angeordnet sind, die bis zu 20% des Kolbenhubs beträgt, vorzugsweise bis zu 10% des Kolbenhubs beträgt, besonders bevorzugt bis zu 5% des Kolbenhubs beträgt.

Eine Mehrzahl von schlitzförmigen Ausnehmungen kann gemäss Fig. 4 in einer Reihe 36 angeordnet sein, die eine Steigung aufweisen kann. Die Steigung ist aus den in Zusammenhang mit der Breite der Ausnehmung genannten Gründen beschränkt auf ein Mass, das kleiner als die Breite des Kolbenrings ist. Der Neigungswinkel 18 der schlitzförmigen Ausnehmungen beträgt bis zu 1°. Die Anzahl der schlitzförmigen Ausnehmungen in einer Reihe kann sich von der Anzahl der schlitzförmigen Ausnehmungen einer benachbarten Reihe unterscheiden, was in Fig. 5 gezeigt ist. Auch die Anzahl und/oder die Tiefe t (11) und/oder die Länge l (9) und/oder die Breite b (10) der schlitzförmigen Ausnehmungen können sich voneinander unterscheiden.

Die schlitzförmigen Ausnehmungen benachbarter Reihen 36, 37, 38 können zumindest teilweise zueinander versetzt angeordnet sein, was in Fig. 5 gezeigt ist. Hierdurch kann die Anzahl der schlitzförmigen Ausnehmungen pro m² Gleitfläche erhöht werden, damit eine möglichst gleichmässige Verteilung von Schmiermittel gewährleistet ist. Die Anzahl der schlitzförmigen Ausnehmungen ist grösser oder gleich 10, insbesondere grösser oder gleich 50 besonders bevorzugt grösser oder gleich 100 pro m² Gleitfläche. Die Anzahl der schlitzförmigen Ausnehmungen pro m² Gleitfläche kann variabel gewählt werden, wenn sich im Betrieb Bereiche der Gleitfläche mit erhöhtem oder verringertem Schmiermittelbedarf feststellen lassen. Beispielsweise kann eine verringerte Anzahl von schlitzförmigen Ausnehmungen oder ein grösserer Abstand benachbarter Reihen von schlitzförmigen Ausnehmungen vorgesehen werden, wie in Fig. 2, Fig. 4 oder Fig. 5 ersichtlich ist.

Fig. 6a - 6h zeigen verschiedene Ausführungsformen für schlitzförmige Ausnehmungen. Die schlitzförmige Ausnehmung gemäss eines der Ausführungsbeispiele der Fig. 1 bis Fig. 6g und Fig. 8 umfasst einen ersten Teil 18 und einen zweiten Teil 19, wobei der erste Teil 18 ein erstes Ende 20 und ein zweites Ende 21 umfasst. Das erste Ende 20 enthält eine erste Öffnung 30 zum Zylinderinnenraum und das zweite Ende 21 eine zweite Öffnung 31 zum Zylinderinnenraum. Der zweite Teil 19 umfasst das zweite Ende 21 und ein drittes Ende 22, wobei das dritte Ende 22 eine dritte Öffnung 32 zum Zylinderinnenraum enthält. Die erste Öffnung 30 und dritte Öffnung 32 sind unterhalb des die schlitzförmige Ausnehmung passierenden Kolbenrings 3 angeordnet und die zweite Öffnung 31 ist gleichzeitig oberhalb des die schlitzförmige Ausnehmung passierenden Kolbenrings angeordnet ist, derart, dass eine Passage für Schmiermittel zwischen dem oberhalb des Kolbenrings befindlichen Zylinderinnenraum und dem unterhalb des Kolbenrings befindlichen Zylinderinnenraum ausbildbar ist, wenn sich der Kolbenring in einer Stellung zwischen einer der ersten oder dritten Öffnungen 30, 32 sowie der zweiten Öffnung 31 befindet.

Fig. 6a zeigt eine schlitzförmige Ausnehmung 5, für welche das erste Teil 18 die gleiche Länge l (9) wie das zweite Teil 19 aufweist. Mit der Länge l soll in diesem Fall die Länge des ersten Teils 18 oder des zweiten Teils 19 bezeichnet werden. Die schlitzförmige Ausnehmung der Fig. 6a ist spiegelsymmetrisch bezogen auf eine Normallinie 27 zur Normalebene 23 auf die Zylinderachse 14 (siehe Fig. 1). Der Neigungswinkel 24, den der erste Teil 18 mit der Normalebene 23 einschliesst, ist gleich dem Neigungswinkel 25, den das zweite Teil 19 mit der Normalebene 23 einschliesst.

Fig. 6b zeigt eine Variante einer schlitzförmigen Ausnehmung 5, in welcher das erste Teil 18 eine grössere Länge l (9) aufweist, wie das zweite Teil 19. Des weiteren kann der Neigungswinkel 24 des ersten Teils 18 zu einer Normalebene 23 auf die Zylinderachse 14 sich vom Neigungswinkel 25 des zweiten Teils 19 zur Normalebene 23 auf die Zylinderachse 14 unterscheiden.

Die Fig. 6c zeigt eine Variante der schlitzförmigen Ausnehmung 5, in welcher das erste Teil 18 und das zweite Teil 19 eine Krümmung aufweisen. Die erste Länge l (9) ist hierbei als Länge der gekrümmten Mittellinie vom ersten Ende 20 zum zweiten Ende 21 definiert. Die zweite Länge l (29) ist als Länge der gekrümmten Mittellinie vom zweiten Ende 21 zum dritten Ende 22 definiert.

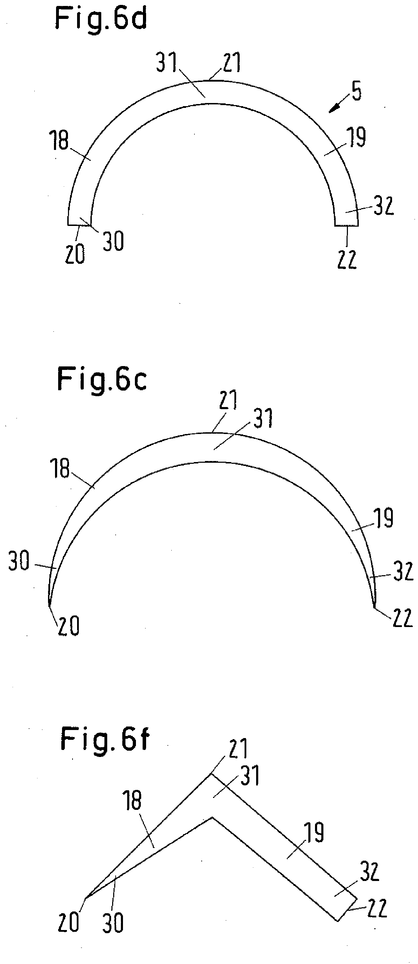

Fig. 6d zeigt eine Variante einer schlitzförmigen Ausnehmung 5, nach welcher das erste Teil 18 und das zweite Teil 19 eine konvexe Krümmung aufweisen.

Selbstverständlich ist es auch möglich, ein erstes Teil 18 mit einer konkaven Krümmung, wie in Fig. 6c gezeigt und ein zweites Teil 19 mit einer konvexen Krümmung, wie in Fig. 6d gezeigt zu kombinieren, was nicht zeichnerisch dargestellt ist.

In Fig. 6e ist eine schlitzförmige Ausnehmung gezeigt, die sich von dem in Fig. 6d gezeigten Ausführungsbeispiel derart unterscheidet, dass die Breite b 10 des ersten Teils 18 und des zweiten Teils 19 variiert. Gemäss Fig. 6e nimmt die Breite vom zweiten Ende 21 zu einem der ersten und dritten Enden 20, 22 kontinuierlich ab, sodass sich eine sichelartige Struktur ergibt.

In Fig. 6f ist wiederum eine Variante gezeigt, nach welcher die Breite des ersten Teils 18 sich von der Breite des zweiten Teils 19 unterscheidet.

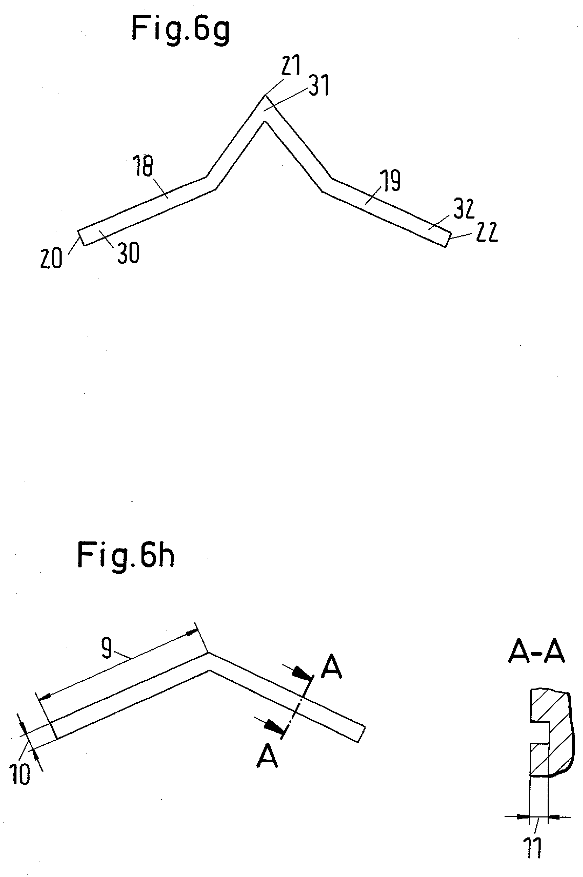

Fig. 6g zeigt wiederum eine Variante eines ersten Teil 18 und eines zweiten Teils 19, welches aus mehreren Abschnitten aufgebaut ist.

Die schlitzförmigen Ausnehmungen weisen somit eine erste Länge l (9) des ersten Teils 18, eine zweite Länge l (29) des zweiten Teils 19 auf, sowie eine Breite b (10) und eine Tiefe t (11) auf, was in Fig. 6h in einem Ausschnitt aus der abgewickelten Zylinderoberfläche im Detail dargestellt ist. Die Tiefe 11 beträgt vorzugsweise über 0.4 mm, was gewährleistet, dass die schlitzförmige Ausnehmung auch bei mehrjähriger Betriebsdauer erhalten bleibt, auch wenn es an der Innenwand des Zylinders zu Materialverlust kommt. Die grosse Tiefe der schlitzförmigen Ausnehmungen hat den weiteren Vorteil, dass das vom Kolbenring eingeschobene Schmiermittel sich während des gesamten weiteren Hubs auf die Innenwand des Zylinders ergiesst und diese mit einem Schmiermittelfilm benetzt. Durch die Anordnung einer Mehrzahl von schlitzartigen Ausnehmungen ist gewährleistet, dass die gesamte Gleitfläche oder zumindest der Teil derselben, welche mit derartigen schlitzförmigen Ausnehmungen ausgerüstet ist, benetzt wird. Mittels dieser Anordnung werden überraschenderweise nicht nur der Schmiermittelverbrauch verringert, sondern auch die Lebensdauer der Zylinderoberfläche erhöht. Der verringerte Schmiermittelverbrauch hat seinen Hauptgrund darin, dass in den schlitzförmigen Ausnehmungen Schmiermittel gespeichert wird. Das Schmiermittel fliesst also nach einem Arbeitszyklus nicht ab oder wird durch die Kolbenringe ausgeschoben, sondern verbleibt grösstenteils in den schlitzförmigen Ausnehmungen. Das Schmiermittel steht in der Folge weiteren Arbeitszyklen zur Verfügung.

Die schlitzförmige Ausnehmung gemäss Fig. 6a bis Fig. 6h ist bestimmt durch eine Länge l (9), eine Breite b (10) sowie eine Tiefe t (11). Die Breite der schlitzförmigen Ausnehmungen liegt in vorteilhafter Weise zwischen 0.5 und 3 mm. Die Breite b muss gerade gross genug sein, dass eine ausreichende Menge Schmiermittel in der Ausnehmung gespeichert werden kann. Andererseits ist die Breite b bevorzugt kleiner als die Breite eines Kolbenrings sein, sodass der Kolbenring nicht von Kanten der schlitzförmigen Ausnehmung erfasst wird. Die Länge der schlitzförmigen Ausnehmungen beträgt zwischen 10 und 100 mm, vorzugsweise zwischen 10 und 50 mm, besonders bevorzugt zwischen 10 und 30 mm.

Fig. 7 eine Darstellung eines Ausschnitts einer Gleitfläche 7 nach dem Stand der Technik. Gemäss dieser Ausführungsform sind keine schlitzförmigen Ausnehmungen vorgesehen. Das Schmiermittel gelangt über die Eintrittsöffnungen 16 auf die Innenwand 12 des Zylinders 1 und wird von dem oder den Kolbenringen auf der Innenwand des Zylinders verteilt. Fig. 7 zeigt den Zustand der Innenwand des Zylinders nach 5722 Betriebsstunden. Deutlich ist an der Innenwand der stärkere Materialverlust zu erkennen. Auf der Innenwand des Zylinders befinden sich Streifen, die vom Honen der Innenwand herrühren. Diese Streifen, die als feine Rillen 39 ausgebildet sind, überziehen die gesamte Innenwand des Zylinders in zwei verschiedenen Richtungen. Diese Rillen sind an der Innenwand des Zylinders kaum noch sichtbar. Des weiteren ist eine deutliche Grenze zwischen einem Gebiet im Bereich der Eintrittsöffnungen und der oberhalb befindlichen Gleitfläche erkennbar. Diese Grenze zeigt an, bis zu welchem Abstand von den Eintrittsöffnungen die Schmierung ausreichend gewesen ist. Der Bereich ausreichender Schmierung macht optisch einen dunkleren Eindruck. Dieser dunklere Bereich ausreichender Schmierung hebt sich deutlich von einem helleren Bereich ab, der erhöhten Materialverlust, beispielsweise durch Korrosion, aufweist. Dementsprechend ist die Metalloberfläche der Gleitfläche in dem helleren Bereich deutlich erkennbar. Der hellere Bereich erstreckt sich gemäss Fig. 7 über die gesamte Gleitfläche mit Ausnahme des dunkleren Bereichs in der unmittelbaren Umgebung der Eintrittsöffnungen. Somit ist deutlich erkennbar, dass durch mangelhafte Schmierung ein erhöhter Materialverlust an der Innenwand des Zylinders feststellbar ist.

Fig. 8 zeigt eine Darstellung der Gleitfläche 7 gemäss der Erfindung. Von Fig. 7 unterscheidet sich Fig. 8 dadurch, dass eine Reihe von schlitzförmigen Ausnehmungen 5 oberhalb der Eintrittsöffnungen 16 und dem Kanal 17 angeordnet ist. Fig. 8 ist die Darstellung einer fotografischen Abbildung der Innenwand des Zylinders nach ungefähr 8000 Betriebsstunden. Zwei Unterschiede zu Fig. 7 sind deutlich mit freiem Auge erkennbar. Zum einen liegt die Grenze zwischen ausreichender Schmierung und der Zone vermehrten Materialverlusts oberhalb der schlitzförmigen Ausnehmungen. Das heisst, dass in dem Bereich zwischen dem Kanal 17 und der Reihe der schlitzförmigen Ausnehmungen 5 die Schmierung ausreichend war. Demzufolge war auch der Materialverlust geringer und die Rillen 39 sind deutlich zu erkennen. Insbesondere ist deutlich zu erkennen, dass die Rillen die gesamte Innenwand in zwei verschiedenen Richtungen durchziehen. Die Rillen kreuzen sich, sodass eine Oberflächenstruktur erkennbar ist, die aus rautenförmigen Einzelelementen aufgebaut ist. Die Rillen stammen wie in Fig. 7 vom Werkzeug, welches die Innenwand des Zylinders während des Verfahrenschritts des Honens bearbeitet hat.

Die schlitzförmigen Ausnehmungen nach einem der vorhergehenden Ausführungsbeispiele werden durch ein mechanisches Bearbeitungsverfahren hergestellt. Hierzu zählen spanabhebende Verfahren, wie beispielsweise Fräsen, nicht aber Verfahren, welche unter thermischem Einfluss arbeiten, wie beispielsweise eine Strukturierung mittels Laser. Ein Laserstrukturierungsverfahren wird vor allem zur Herstellung von Rillen im Mikrometerbereich verwendet und ist für die Herstellung der erfindungsgemässen schlitzförmigen Ausnehmungen mit Tiefen im Millimeterbereich nicht geeignet.

Bereits im Einsatz befindliche Zylinder können nachträglich im Rahmen von routinemässigen Wartungsarbeiten oder Reparaturen mit schlitzartigen Ausnehmungen versehen werden. Insbesondere bei Zylindern, die in einem Grossmotor Verwendung finden, kann der Schmiermittelbedarf durch die gezielte nachträgliche Anbringung von schlitzartigen Ausnehmungen verringert werden.

## Patentansprüche

1. Zylinder (1) für eine Kolbenmaschine zur Aufnahme eines mindestens mit einem Kolbenring (3) ausgestatteten Kolbens (2), umfassend eine schlitzförmige Ausnehmung (5) zur Aufnahme und Verteilung von Schmiermittel, wobei der Zylinder eine Gleitfläche (7) für den Kolben (2) umfasst, wobei die Gleitfläche (7) sich von einer oberen Totzone (8) zu einer auf dem Zylinder angeordneten Reihe von Spülschlitzen (6) erstreckt, wobei die schlitzförmige Ausnehmung (5) auf der Gleitfläche (7) angeordnet ist, und eine Mehrzahl von schlitzförmigen Ausnehmungen vorgesehen ist, deren Enden derart miteinander verbunden sind, dass ein durchgehender Kanal (17) gebildet wird, der sich entlang der Gleitfläche (7) erstreckt, wobei in dem durchgehenden Kanal (17) eine Eintrittsöffnung (16) zur Zufuhr von Schmiermittel angeordnet ist, und wobei der durchgehende Kanal (17) von der oberen Totzone (8) weiter entfernt angeordnet ist als die schlitzförmige Ausnehmung (5), **dadurch gekennzeichnet, dass** die schlitzförmige Ausnehmung einen ersten Teil (18) umfasst und einen zweiten Teil (19) umfasst, wobei der erste Teil (18) ein erstes Ende (20) und ein zweites Ende (21) umfasst, wobei das erste Ende (20) eine erste Öffnung (30) zum Zylinderinnenraum enthält und das zweite Ende (21) eine zweite Öffnung (31) zum Zylinderinnenraum enthält, wobei der zweite Teil (19) das zweite Ende (21) und ein drittes Ende (22) umfasst, wobei das dritte Ende (22) eine dritte Öffnung (32) zum Zylinderinnenraum enthält, und die erste Öffnung (30) und dritte Öffnung (32) unterhalb des die schlitzförmige Ausnehmung (5) passierenden Kolbenrings (3) angeordnet sind und die zweite Öffnung (31) gleichzeitig oberhalb des die schlitzförmige Ausnehmung (5) passierenden Kolbenrings (3) angeordnet ist, derart, dass eine Passage für Schmiermittel zwischen dem oberhalb des Kolbenrings (3) befindlichen Zylinderinnenraum und dem unterhalb des Kolbenrings (3) befindlichen Zylinderinnenraum ausbildbar ist, wenn sich der Kolbenring (3) in einer Stellung zwischen einer der ersten oder dritten Öffnungen (30, 32) sowie der zweiten Öffnung (31) befindet.

2. Zylinder (1) nach Anspruch 1, wobei der erste Teil und der zweite Teil in einer Projektion der Gleitfläche auf eine Ebene Strecken ausbilden, wobei zwischen den ersten und zweiten Strecken ein Winkel (35) eingeschlossen ist, der grösser als 0° und kleiner als 180° ist.

3. Zylinder (1) nach Anspruch 1 oder 2, wobei einer der ersten oder zweiten Teile (18, 19) der schlitzförmigen Ausnehmung eine Länge (9) aufweist, sowie eine Breite (10) und eine Tiefe (11), wobei die Länge (9) grösser als die Breite (10) oder die Tiefe (11) ist.

4. Zylinder (1) nach Anspruch 1 oder 2, wobei dieTiefe (11) über 0.4 mm beträgt.

5. Zylinder (1) nach einem der vorhergehenden Ansprüche, wobei eine Schmiermittelquellezur Bereitstellung von Schmiermittel im Innenraum des Zylinders vorgesehen ist.

6. Zylinder (1) nach Anspruch 5, wobei die Eintrittsöffnung (16) an der Innenwand des Zylinders zur Förderung des Schmiermittels in den Kolbenraumvorgesehen ist.

7. Zylinder (1) nach einem der vorhergehenden Ansprüche, wobei die schlitzförmige Ausnehmung in einer Distanz von der oberen Totzone (8) angeordnet ist, die bis zu 20% des Kolbenhubs beträgt.

8. Zylinder (1) nach einem der vorhergehenden Ansprüche, wobei die schlitzförmige Ausnehmung an ihrem zweiten Ende einen Scheitelpunkt aufweist, wobei die Scheitelpunkte benachbarter schlitzförmiger Ausnehmungen den gleichen Abstand zur oberen Totzone (8) aufweisen.

9. Zylinder (1) nach Anspruch 8, wobei die Scheitelpunkte benachbarter schlitzförmiger Ausnehmungen zueinander versetzt angeordnet sind.

10. Zylinder (1) nach einem der vorhergehenden Ansprüche, wobei der Zylinder einen Durchmesser grösser als 190 mm aufweist.

11. Zylinder-Kolben-Anordnung umfassend einen Zylinder (1) nach einem der vorangehenden Ansprüche und einen Kolben (2), wobei eine Schmiermittelquelle zur Bereitstellung von Schmiermittel am Kolben (2) vorgesehen ist.

12. Verwendung des Zylinders (1) nach einem der Ansprüche 1-10 oder der Zylinder-Kolben-Anordnung nach Anspruch 11 in einem Grossmotor.

## Claims

1. A cylinder (1) for a reciprocating piston engine for the reception of a piston (2) at least equipped with one piston ring (3), including a slit-shaped cut-out (5) for the reception and distribution of lubricant, wherein the cylinder includes a sliding surface (7) for the piston (2), wherein the sliding surface (7) extends from an upper dead center zone (8) to a row of scavenging slits (6) arranged on the cylinder, wherein the slit-shaped cut-out (5) is arranged at the sliding surface (7) and a plurality of slit-shaped cut-outs is provided whose ends are connected to one another such that a throughgoing passage (17) is formed which extends along the sliding surface (7), wherein an inlet opening (16) for the supply of lubricant is arranged in the throughgoing passage (17) and wherein the throughgoing passage (17) is arranged at a greater distance from the upper dead center zone (8) than the slit-shaped cut-out (5), **characterized in that** the slit-shaped cut-out includes a first part (18) and includes a second part (19), with the first part (18) including a first end (20) and a second end (21), with the first end (20) containing a first opening (30) to the inner cylinder space and the second end (21) containing a second opening (31) to the cylinder inner space, with the second part (19) including the second end (21) and a third end (22), with the third end (22) containing a third opening (32) to the cylinder inner space, and the first opening (30) and the third opening (32) being arranged beneath the piston ring (3) passing the slit-shaped cut-out (5) and the second opening (31) simultaneously being arranged above the piston ring (3) passing the slit-shaped cut-out (5) such that a passage can be formed for lubricant between the inner cylinder space located above the piston ring (3) and the inner cylinder space located beneath the piston ring (3) when the piston ring (3) is located in a position between one of the first or third openings (30, 32) and of the second opening (31).

2. A cylinder (1) in accordance with claim 1, wherein the first part and the second part form paths in a projection of the sliding surface onto a plane, with an angle (35) being included between the first and second paths which is larger than 0° and less than 180°.

3. A cylinder (1) in accordance with claim 1 or claim 2, wherein one of the first or second parts (18, 19) of the slit-shaped cut-out has a length (9) as well as a width (10) and a depth (11), with the length (9) being larger than the width (10) or the depth (11).

4. A cylinder (1) in accordance with claim 1 or claim 2, wherein the depth (11) amounts to more than 0.4 mm.

5. A cylinder (1) in accordance with any one of the preceding claims, wherein a lubricant source is provided for the provision of lubricant in the cylinder inner space.

6. A cylinder (1) in accordance with claim 5, wherein the inlet opening (16) is provided at the inner wall of the cylinder for the conveying of the lubricant into the piston space.

7. A cylinder (1) in accordance with any one of the preceding claims, wherein the slit-shaped cut-out is arranged at a distance from the upper dead center zone (8) which amounts to up to 20% of the piston stroke.

8. A cylinder (1) in accordance with any one of the preceding claims, wherein the slit-shaped cut-out has a vertex at its second end, with the vertices of adjacent slit-shaped cut-outs having the same spacing from the upper dead center zone (8).

9. A cylinder (1) in accordance with claim 8, wherein the vertices of adjacent slit-shaped cut-outs are arranged offset to one another.

10. A cylinder (1) in accordance with any one of the preceding claims, wherein the cylinder has a diameter larger than 190 mm.

11. A cylinder-piston arrangement, comprising a cylinder (1) in accordance with any one of the preceding claims and a piston (2), wherein a lubricant source is provided for the provision of lubricant on the piston (2).

12. The use of the cylinder (1) in accordance with any one of the claims 1-10 or the cylinder-piston arrangement in accordance with claim 11 in a large engine.

## Revendications

1. Un cylindre (1) pour un moteur à piston pour recevoir un piston (2) équipé d'au moins un segment de piston (3), comprenant un évidement en forme de fente (5) pour recevoir et distribuer un lubrifiant, dans lequel le cylindre comprend une surface de glissement (7) pour le piston (2), dans lequel la surface de glissement (7) s'étend d'une zone morte supérieure (8) à une rangée de fentes de rinçage (6) disposées sur le cylindre (6), dans lequel l'évidement en forme de fente (5) est disposé sur la surface de glissement (7) et une pluralité des évidements en forme de fente est prévue, dont les extrémités sont reliées les unes aux autres de telle sorte qu'il se forme un canal continu (17) qui s'étend le long de la surface de glissement (7), dans lequel une ouverture d'entrée (16) pour l'alimentation en lubrifiant est prévue dans le canal continu (17), et dans lequel le canal continu (17) est disposé plus loin de la zone morte supérieure (8) que l'évidement en forme de fente (5), **caractérisé en ce que** l'évidement en forme de fente comprend une première partie (18) et une deuxième partie (19), dans lequel la première partie (18) comprend une première extrémité (20) et une deuxième extrémité (21), dans lequel la première extrémité (20) comprend une première ouverture (30) vers l'intérieur du cylindre et la deuxième extrémité (21) comprend une deuxième ouverture (31) vers l'intérieur du cylindre, dans lequel la deuxième partie (19) comprend la deuxième extrémité (21) et une troisième extrémité (22), dans lequel la troisième extrémité (22) comprend une troisième ouverture (32) vers l'intérieur du cylindre, et la première ouverture (30) et la troisième ouverture (32) sont disposées sous le segment de piston (3) passant par l'évidement en forme de fente (5) et la deuxième ouverture (31) est disposée simultanément au-dessus du segment de piston (3) passant par l'évidement en forme de fente (5), de telle sorte qu'un passage de lubrifiant peut être formé entre l'intérieur du cylindre situé au-dessus du segment de piston (3) et l'intérieur du cylindre situé au-dessous du segment de piston (3), lorsque le segment de piston (3) est dans une position entre l'une des première ou troisième ouvertures (30, 32) et la deuxième ouverture (31).

2. Un cylindre (1) selon la revendication 1, dans lequel la première partie (18) et la deuxième partie forment des trajectoires dans une projection de la surface de glissement sur un plan, dans lequel, entre les premier et deuxième trajets, un angle (35) est inclus, qui est supérieure à 0° et inférieure à 180°.

3. Un cylindre (1) selon la revendication 1 ou 2, dans lequel l'une des première ou deuxième parties (18, 19) de l'évidement en forme de fente a une longueur (9) et une largeur (10) et une profondeur (11), la longueur (9) étant supérieure à la largeur (10) ou la profondeur (11).

4. Un cylindre (1) selon la revendication 1 ou 2, dans lequel la profondeur (11) est supérieure à 0,4 mm.

5. Un cylindre (1) selon l'une des revendications précédentes, dans lequel une source de lubrifiant est prévue pour fournir du lubrifiant à l'intérieur du cylindre.

6. Un cylindre (1) selon la revendication 5, dans lequel l'ouverture d'entrée (16) est prévue sur la paroi intérieure du cylindre pour transporter le lubrifiant dans l'espace du piston.

7. Un cylindre (1) selon l'une des revendications précédentes, dans lequel l'évidement en forme de fente est disposé à une distance de la zone morte supérieure (8) qui est jusqu'à 20% de la course du piston.

8. Un cylindre (1) selon l'une des revendications précédentes, dans lequel l'évidement en forme de fente a un sommet à sa deuxième extrémité, les sommets des évidements adjacents en forme de fente étant à la même distance de la zone morte supérieure (8).

9. Un cylindre (1) selon la revendication 8, dans lequel les sommets des évidements adjacents en forme de fente sont disposés en décalage l'un par rapport à l'autre.

10. Un cylindre (1) selon l'une des revendications précédentes, dans lequel le cylindre a un diamètre supérieur à 190 mm.

11. Un agencement cylindre-piston comprenant un cylindre (1) selon l'une des revendications précédentes et un piston (2), dans lequel une source de lubrifiant est prévue pour fournir un lubrifiant au piston (2).

12. L'utilisation du cylindre (1) selon l'une des revendications 1-10 ou l'agencement cylindre-piston selon la revendication 11 dans un grand moteur.
